# EUROPEAN PATENT APPLICATION

(11) **EP 3 962 128 A1**
(43) Date of publication of application: **02.03.2022**
(21) Application number: 20192943.7
(22) Date of filing: 26.08.2020
(51) Int. Cl.: H04W 4/90, H04W 4/029, H04W 4/44, G08G 1/00, G08G 1/01, G08G 1/0967, G08G 1/0968, G08G 1/087, G01C 21/34

(54) **DATA NETWORK FOR CONTROLLING AND SPEEDING UP AN EMERGENCY RESPONSE**

(71) Applicant: Deutsche Telekom AG, 53113 Bonn (DE)
(72) Inventor: VAN DEN BERGE, Fridtjof, 53227 Bonn-Oberkassel (DE)
(74) Representative: Vossius & Partner Patentanwälte Rechtsanwälte mbB

(57) **Abstract**

A system for controlling and speeding up the driving of an emergency vehicle to an emergency site location, the system comprising: a data network, an emergency control center, and a central computing center connected to a central database, wherein: the data network is configured to provide connectivity between the central computing center and the emergency control center; the emergency control center is configured to receive emergency information through a call or a warning, and transfer the received emergency information to the central computing center; the emergency control center is configured to acquire location data information of an emergency site location; the data network is configured to transmit the emergency information from the emergency control center to the central computing center, the emergency information comprising one or more of the following parameters: emergency site location, needed amount of required emergency vehicles and/or personnel, sizes of the required emergency vehicles, and starting target-point; the central computing center is configured to signal instructions for adjustment, based on all available information, over the data network, to traffic entities on the way.

## Description

### Field of the invention

The invention relates to a data network for controlling, speeding up an emergency response and making the urging deployment safer for all involved. The data network of the invention also relates to driving an emergency vehicle(-s) to a site of a particular incident(s) in an optimized way.

### Background

In various countries an action for a greater awareness to free a lane for emergency vehicles is being started.

Typically a driver starts taking action once a siren is heard or the blueish flashing lights come into view. Yet, drivers may often hear a siren of an emergency vehicle - be it e. g. a police vehicle, a firefighter vehicle, or an ambulance - but may not have a notion of a position and/or travelling direction and closing speed of the vehicle with the siren and/or with the deployed flashing lights.

For instance, the firefighter's deployment on incidents, are mostly triggered by an outside alarm through mostly a link with a sensor or a call (to for instance the emergency number 112 for Europe resp. 911 for the U.S.A.) from an observer who reports the specific emergency.

The coordination of a deployment of a crew/personnel/squad/team as well as the services needed for each specific emergency are mostly based on the judgements of a coordinator at an emergency/coordinator control center. Thus, based on the description from the call, the coordinator coordinates an appropriate deployment of emergency team(s).

However, it often occurs that the orders and/or outsets given by the emergency control center/coordinator center are not optimal, as for example they do not consider if a traffic light is restricting the flow and ability to drive through for instance an only two lanes road. Without a third lane, but with the formed traffic-congestion, the use of a designated transit lane -in case of an emergency- is not yet decided by law and thus a risk to all road-users. In many cases even a barrier between lanes with a different driving-direction is existing, thus deleting the aforementioned option.

### Technical problem

Nowadays one of the main problems is the growth of traffic on the road and the sizes of the participating vehicles on this road, e. g. the increase of family-vans and/or so-called SUV vehicles, which barely existed in the last decade(s). Yet the infrastructure did not evolve in accordance with these sizes, as road constructions normally cost a lot of money. Most streets are still based on the available space for these since (over) 70 years. Various roads in (mostly elder-) cities may still have the width of the earlier medieval roads between the houses.

Further, a new problem is also becoming important as part of the increasing numbers of the so-called self-driving/autonomous cars, which form a growing contingency, along with the intermediate version of cars with a full load of driving-assistance systems.

Normally, when a user driving a car hears a siren or sees some blue lights, said user looks into the rear-view mirror so as to check from which direction the siren or the lights are coming from. Such a comprehension may require an effort, as the surrounding may not make a comprehension easy. Sometimes, this effort has to be performed while driving the car in a situation with a higher traffic congestion and/or within a surrounding with a non-explicit visual, through also big glass façades or those made of polished metals. Other situations where such a comprehension may require further efforts may occur due to e. g. the sitting-height of the driver in the car, a possible blocking of a view by other vehicles and/or negative local weather conditions, with e. g. a dense foggy surrounding, or full rain in the dark.

In sum, due to various different circumstances, as exemplary mentioned above, a free-vision on the surroundings may be restricted. Through such circumstances a delay will occur throughout the route of an emergency vehicle(s) towards an incident location. This may cause several problems such that: the emergency vehicle may not arrive on time to deal with an emergency, the emergency may worsen by the time the emergency vehicle arrives, etc.

In addition, the aforementioned self-driving/autonomous vehicles are getting closer to a more widespread deployment, which in itself rises the potential problem for emergency vehicles. The self-driving/autonomous vehicles may have a multitude of sensors, such as audio microphones, cameras, Light Detection and Ranging (LiDAR), radar and/or ultrasonic. The problem with these is, that in higher densities of vehicles on the road, or at locations with sound/visual reflecting surroundings successful operation may not be always assured. Further, known navigational systems, as of today, do not provide an overview in a real-time fashion of the actual traffic-flow and/or any hindrances with regard to a reduction of available driving-lanes due to for instance work on the subsequent road-sections.

In view of the above, the present invention aims at providing support and indications to a driver, i.e. the direction and lane of the emergency services, which would have to pass the (crowded/bad conditions) section to be able to support a victim(s) and to solve an occurred mishap faster.

It is also an object of the present invention for an unaware driver to solve an occurring stressful experience and to reduce the chance of making a mistake, which may result in a car collision or car damage on the side of the normal road-user, or an extended time for the emergency vehicle(-s) to come to the incident and in that may possibly lose the time-battle for a successful rescue of any endangered/injured persons.

### Summary of the invention

The above objects are achieved by the features of the independent claims. Preferred aspects are defined in the dependent claims.

According to a first aspect, the invention provides a system for controlling and speeding up the driving of an emergency vehicle to an emergency site location, the system comprising: a data network, an emergency control center, and a central computing center connected to a central database, wherein: the data network is configured to provide connectivity between the central computing center and the emergency control center; the emergency control center is configured to receive emergency information through a call or a warning, and transfer the received emergency information to the central computing center; the emergency control center is configured to acquire location data information of an emergency site location; the data network is configured to transmit the emergency information from the emergency control center to the central computing center, the emergency information comprising one or more of the following parameters: emergency site location, needed amount of required emergency vehicles and/or personnel, sizes of the required emergency vehicles, and starting target-point; the central computing center is configured to signal instructions for adjustment, based on all available information, over the data network, to traffic entities on the way.

Preferably, the central computing center is further configured to, taking into account all the available information, calculate the most optimal traffic route towards the emergency site location.

Preferably, the calculation of the most optimal traffic route towards the emergency site location at the central computing center comprises: measuring the congestion level by taking into account one or more of the following information: number of usable lanes of the road, respective traffic-flow of the road and its speed, possible additions in bends/roundabouts on the road, and number of big vehicles and its seizes.

Preferably, the signaling of instructions for adjustment, over the data network, to traffic entities on the optimal route, further comprises instructing any blocking vehicles to get out of the way.

Preferably, the location data information comprises: GPS information and/or information from sensors in the emergency site location.

Preferably, the system further comprising a satellite having connectivity with the central database, wherein: the data network is further configured to acquire information from the satellite, said satellite information comprising: location and/or tracking information of the vehicles on a road; the central computing center is configured to combine the information from the emergency control center with the information from the satellite, wherein the information from the satellite comprises real-time GPS information and/or data from locally based traffic sensors.

Preferably, the data from the locally based traffic sensors comprises real time information regarding: local road infrastructure, undergoing road constructions having been commenced, and/or traffic congestions on the road towards the incident.

Preferably, the data network is a cellular data network, wherein the cellular data network comprises a 4G, 5G and/or WiFi network, and/or wherein the cellular data network comprises a fixed network.

Preferably, the central database is configured to store all the information from the own connectivity data network, emergency site location entities, and satellite, the central computing center is configured to manage the information stored at the central database, and in an emergency case, the central computing center is configured to distribute this information to the emergency control center and/or to designated emergency personnel and vehicles on the call for the emergency.

Preferably, the data network is configured to acquire data from the emergency site location through the use of sensors in the emergency site location.

Preferably, the system further comprising an Authority Access, AA, server configured to perform access control to the data network, the central computing center and/or the central data base, and/or wherein the AA server has connectivity to front-end instances of the central computing center and/or central data base through either a gateway, GW, and/or a Mobile Switching Center, MSC, node of the data network.

Preferably, the AA server comprises a secure gateway for an authority or authorities with a limited accessibility through a dedicated access control list, ACL; and/or wherein the AA server is configured to enable a respective public office or authority to feed the central database with road information.

Preferably, the system further comprising a Home Location Register, HLR, and/or a Home Subscriber Server, HSS, wherein the HLR and/or HSS are configured to store a white list of international mobile subscriber identities, IMSIs, related to emergency vehicles for indicating possible deployment vehicles.

Preferably, the central database comprises one or a combination of the following information: maps and plans of infrastructural issues on a real-time bases; signaling information from the traffic sensors and sensors from the emergency site location as well as the sensor's location.

According to a second aspect, the invention provides a method for controlling and speeding up the driving of an emergency vehicle to an emergency site location in a system, wherein the system comprises: a data network, an emergency control center, and a central computing center connected to a central database, the method comprising the steps of: providing, by the data network, connectivity between the central computing center and the emergency control center; receiving, at the emergency control center, emergency information through a call or a warning, and transferring the received emergency information to the central computing center; acquiring, by the emergency control center, location data information of an emergency site location; transmitting, by the data network, the emergency information from the emergency control center to the central computing center, the emergency information comprising one or more of the following parameters: emergency site location, needed amount of required emergency vehicles and/or personnel, sizes of the required emergency vehicles, and starting target-point; signaling, from the central computing center, instructions for adjustment, based on all available information, over the data network, to traffic entities on the way.

Preferably, the method further comprising: calculating, by the central computing center, taking into account all the available information, the most optimal traffic route towards the emergency site location.

Preferably, calculating of the most optimal traffic route towards the emergency site location at the central computing center comprises: measuring the congestion level by taking into account one or more of the following information: number of usable lanes of the road, respective traffic-flow of the road and its speed, possible additions in bends/roundabouts on the road, and number of big vehicles and its seizes.

Preferably, the signaling of instructions for adjustment, over the data network, to traffic entities on the optimal route, further comprises instructing any blocking vehicles to get out of the way.

Preferably, the location data information comprises: GPS information and/or information from sensors in the emergency site location.

Preferably, the system further comprising a satellite having connectivity with the central database, the method further comprising: acquiring, by the data network, information from the satellite, said satellite information comprising: location and/or tracking information of the vehicles on a road; combining, by the central computing center, the information from the emergency control center with the information from the satellite, wherein the information from the satellite comprises real-time GPS information and/or data from locally based traffic sensors.

Preferably, the data from the locally based traffic sensors comprises real time information regarding: local road infrastructure, undergoing road constructions having been commenced, and/or traffic congestions on the road towards the incident.

Preferably, the data network is a cellular data network, wherein the cellular data network comprises a 4G, 5G and/or WiFi network, and/or wherein the cellular data network comprises a fixed network.

Preferably, the method further comprising: storing, by the central database, all the information from the data network, emergency site location entities, and satellite; managing, by the central computing center, the information stored at the central database, and distributing, by the central computing center, in an emergency case, the information stored by the central database to the emergency control center and/or to designated emergency personnel and vehicles on the call for the emergency.

Preferably, the method further comprising: acquiring, by the data network, data from the emergency site location through the use of sensors in the emergency site location.

Preferably, the system further comprises an Authority Access, AA, server, and the method further comprises: performing, by the AA server, access control to the data network, the central computing center and/or the central data base, and/or wherein the AA server has connectivity to front-end instances of the central computing center and/or central data base through either a gateway, GW, and/or a Mobile Switching Center, MSC, node of the data network.

Preferably, the AA server comprises a secure gateway for an authority or authorities with a limited accessibility through a dedicated access control list, ACL, and/or the method further comprises: enabling, by the AA server, a respective public office or authority to feed the central database with road information.

Preferably, the system further comprises a Home Location Register, HLR, and/or a Home Subscriber Server, HSS, and the method further comprises the step of: storing, by the HLR and/or HSS, a white list of international mobile subscriber identities, IMSIs, related to emergency vehicles for indicating possible deployment vehicles.

Other aspects, features, and advantages will be apparent from the summary above, as well as from the description that follows, including the figures and the claims.

### Brief description of the drawings

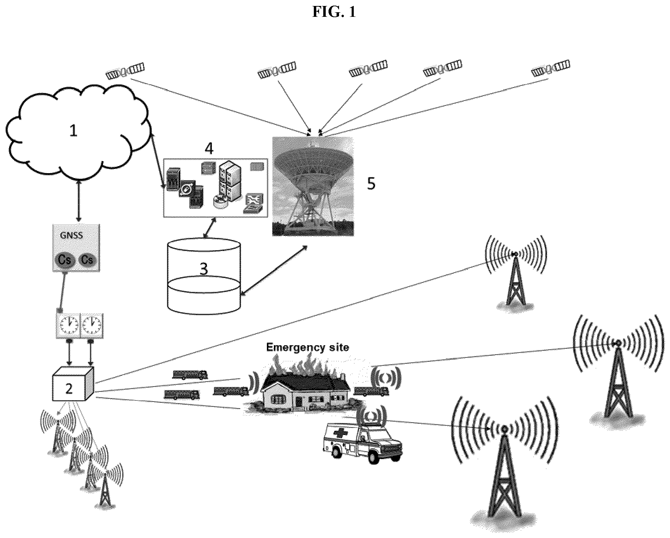

- FIG. 1: illustrates an exemplary data network according to the invention.

### Detailed description of the invention

FIG. 1 illustrates an exemplary system according to the invention. According to the example of FIG. 1, the system comprises: a data network 1 comprising a core network 11, an emergency control center 2, a central database 3, a cloud or central computing center 4 configured to control all the elements of said data network 1, and an optionally available satellite-system 5.

According to a preferred embodiment, the invention provides a system comprising a data network 1 (i.e. a cellular data network) for controlling and speeding up the driving of an emergency vehicle(-s) to a site of a particular incident(s). The data network 1 may also indicate to the other travelling vehicles, in the same direction and same lane as the one of the emergency vehicle, that (an) emergency vehicle(s) is advancing to their own positions.

Also, the coming streets which are in connectivity to the proceeded road, may be warned in advance, with eventually additional action(s) being taken through the data network's infrastructure and connectivities to urban and/or rural infrastructures.

The data network 1 is configured to acquire relevant emergency information for the emergency service which is required. The emergency information may involve acquiring information from an emergency (or coordinator) control center. The acquired relevant information may comprise one or more of the following parameters: needed amount of required emergency vehicles, their respective sizes (as e. g. height, length, width and weight), starting target-point, the optimal vehicle track(-s) to the deployment with the according redundancy, the actual flow of vehicles and-so-on.

The data network 1 may acquire information from a satellite-system, said information comprising: location/positioning/tracking of the vehicles on the road.

The data network 1 may acquire information comprising a city's suburban planning information comprising, for example road-widths, maximum-load capacities of bridges, asphalt-quality of sections, possible existing streetcar-tracks as well real-time table for active lines, construction works, hindrances due to road-narrowings and the like, in an automated electronic file format delivered to the data network 1.

As the city's suburban planning information may change, i.e. through a logbook functionality, only the changed data is updated to the central computing center 4 and the respective central database 3 instance. Thus, dataflows are kept at a lower level, so that no data-congestions in the IP-networks will rise *as well as* cost-factors will be kept as low as possible.

With the above information, an optimized preferred track for the deployment of emergency vehicles can be calculated on the basis of the current traffic-flow and its development.

The data network 1 may further acquire precise data on the occurred calamity with its critical spots acquired through sensors.

The satellite-system is connected with the central database 3, and the central database 3 is connected to the central computing center 4.

The data network 1 provides connectivity between the central computing center 4 and the emergency/coordinator control center. The central computing center 4 is connected with the emergency/coordinator control center through the core network.

The emergency control center 2 gets location data information from, for example, GPS, sensors in the emergency site location and from traffic sensors (such as camera and/or radars). In this regard, it is noted that land-based motor vehicles may also be equipped with radar installations. The data network 1 provides connectivity between all the entities as exemplary shown in FIG. 1.

The data network 1 may preferably be a cellular network, i.e. a 4G, 5G and/or WiFi network, and/or fixed network as well as any other suitable future standard compatible network, or a combination thereof. Thus, a potential involvement of personnel and/or vehicles can always be passed on to the appropriate units/vehicles over e. g. 4G, 5G, WiFi or any other (future) suitable network to the "normal user" on for instance the street. Accordingly, an extended range of connectivity between the responsible appropriate office and the deployable forces (from possibly various organizations), even outside the respective jurisdiction, over to the here before named (mostly unaware) the "normal user" is provided.

To this, all calls/warnings coming into the emergency/coordinator control center are transferred through the required specific media on a direct way to the given deployable forces and through connectivity towards the central computing center 4. At the central computing center 4 the data from the emergency/coordinator control center is combined with other data, such as, for example, the data coming from the satellite-system which may comprise, inter alia, real-time GPS data and other data from locally-based traffic sensors.

The data from the locally based traffic sensors may comprise real time data regarding: the local road infrastructure, undergoing road constructions having been commenced, traffic congestions on the road towards the incident.

Taking into account all the available data, the central computing center 4 is configured to calculate the best/most optimal route(-s) towards the incident/emergency location.

This calculation which includes all the above-mentioned acquired information being taken into consideration, exceeds the outcomes of the nowadays navigational systems. From this acquired information, a subsequent current traffic-flow over various sections of a to be travelled way is checked up on for the emergency service(-s) involved. Traffic-flow can be defined as comprising the following information: traffic-congestion, which defines a bad or even no traffic-flow; traffic-growth, which indirectly defines a possible lower traffic-flow as a congestion in the traffic would more easily occur. The meant parameters are diverse. They do and/or may include: information(-s) on infrastructural situations (in file-formats received information), GPS or likewise satellite-system information (GAGAN / GLONASS / GNSS / MSAS, etc.), traffic-sensory (camera, ..., radar). The calculation may further include checking all possible traffic-flows on every alternative route.

The calculation of the best/most optimal traffic route towards the incident/emergency location at the central computing center 4 may comprise measuring the congestion level by taking into account the number of usable lanes, the respective (traffic-)flow, its speed, the possible additions in bends/roundabouts on the road, big vehicles (which may be difficult to pass) and further relevant settings towards the mission goal. The optimal traffic route is then calculated.

For example, the optimal traffic route may be calculated based on the amount of travelling distance involved, as well as the number of turns.

The optimal traffic route may be calculated for each emergency vehicle individually.

Preferably, the emergency/coordinator control center may be configured to signal instructions for adjustment to all those traffic entities (i.e. traffic-light control steering) on the route in order to allow, inter alia, possible blocking vehicles to get out of the way. This appropriate signaling can be signaled in parallel and/or simultaneously over the data network 1 (e.g. over a fixed or cellular data network 1) infrastructure to the central computing center 4.

In the central database 3 of the system, the data from the own connectivity and location entities (thus including various sensors), as well as from e. g. radar-installations and satellite network(s) is stored and managed by the central computing center 4. In an emergency's case, the central computing center 4 may distribute this information to the emergency/coordinator control center, as well as to the designated emergency personnel and vehicles on the call for the emergency.

For networking, authorized staff member from public offices are identified with an identifier (ID), such as, for example, a unique authentication ID. The ID defines the specific instances of the central database 3 and the central computing center 4 on to which an administrative access is permitted for each specific staff member. Any entry made by a staff member may be done with a recording of his ID to the entered information.

In this regard, manually added information from an authorized staff member and/or administrator should preferably override a respective machine-input, if need be, as a human may have a reporting of possible important information from a locally present reporter.

The system may further include an authority access (AA) server. The AA server is configured to control the access to the network. In particular, the AA server may control the access to the relevant central database 3 and central computing center 4 instances.

Preferably, the AA-server has connectivity to front-end instances of the central database 3 and/or central computing center 4.

Preferably, the data network 1 may provide this connectivity through either a gateway (GW) and/or a Mobile Switching Center (MSC) node, or similar node(-s) of the data network 1. Accordingly, the AA-server can, through these entities, reach one or more front end-instance(s) of the central database 3 and/or central computing center 4.

Preferably, such an AA- server is a special and highly secured gateway for an authority or authorities, with a limited access-ability through an appropriate and dedicated access control list (ACL). The accessibility to the central database 3 and/or central computing center 4 from the AA-server through the front end-instances of the central database 3 for co-controlling authorities is restricted to specific community-related entities.

In other words, no outside-instance, as for example an authority or likewise, will ever get a direct access to databases. Thus, the access is only carried through this so-called front-end nodes, which are available for queries.

Admittance to the AA-server is very limited and the control on such an allowance to be able to administer relevant configurations and/or changes is very high, from a security point of view.

Such here before mentioned community-related entities could range from infrastructural instances to even airborne, land-based and/or seaborne vehicle-related E.212-International Mobile Subscriber Identities, IMSIs, for specific purposes. The vehicle-related E.212-IMSIs could hold a contingency of supportive vehicles for any kind of possible calamity, which could be white-listed for a respective input. The input could mainly be information from the central database 3 instances over the data network 1 towards the deployed vehicles and personnel, to support their (fastest) progress towards the subsequent calamity. The white-list could clear the receiving instances (i.e. deployed contingencies). Every other IMSI could be blacklisted, until it is whitelisted by the relevant authority.

To such a purpose all possible vehicles with their respective IMSI must be administrated in the respective Home Location Register (HLR) (in 2G - 3G) or Home Subscriber Server (HSS) (in 4G and possibly following standards) as a possible employment-vehicle.

Preferably, the AA-server is configured to enable the respective public office(-s) (i.e. city's offices/departments, authorities in co-operation to solve the occurred emergency) to feed the central database 3 and/or central computing center 4 instance(-s) over the respective front end-instances with road information such as, for example, (possible-) restricted sections in road and likewise. This input can be made manually, or even better in automated modus. This way, it is possible to make great and speedy advancements e. g. all information on construction works, the actual traffic flows on various trajectories, etc., may come from the authorities and their respective sensors.

The administrative influence (as in input by e. g. public office(s) who have the authority and lead over road constructions, as well as issuing permits to put a mobile crane stationary partly on the road for structural work on a building) on the, through this connection, accessible database's front end-instance(s) is concerning on for instance road infrastructures, to whom a status alteration can be given, as may be required during a necessary power-line maintenance after an incident of for instance a broken tree (-branch) hit the line.

Preferably, the central database 3 and/or central computing center 4 contains all the needed information on the surroundings and its infrastructures of communities, on basis of:
- Maps and plans of the infrastructural issues of the appropriate public-office for the community on a real-time (updated) basis. Through this, a continuous data integrity of infrastructural issues on the community and its surroundings is ensured. As such, the central database 3 and/or central computing center 4 may calculate in a real-time fashion alternative routes for emergency-deployments. The map may show the locations of the various activities/work being done in an urban respective rural area. The plans may show the details of the respective work (to be done and already in progress), its influence on the existing infrastructure, the start and planned deadline of the measurement, etc. The respective allowances, the planning for the effects on the area, etc., are tasks of each dedicated public-office. This information is IT-specific and put in an information file-format (set by a standard), which can be transferred to and read by the hardware of emergency-services.
- The signaling from the community's sensors (i.e. locally based sensors, traffic sensors, etc.). Through these, also congestion-relevant information is gathered of traffic flows on the various streets.
- The signaling from traffic lights, railway-barriers and likewise, with their exact location(-s).
- Calculations on the most-efficient routes and likewise are triggered with the start of an alarm. In such a case, the kind of emergency, needed departments, vehicles and resources, their starting point(s) of deployment, their route(-s), are calculated by the central database 3 and/or central computing center 4.
- Preset maximums of vehicles to their travelling speed (e.g. a default per which an assumption for a calculation can be made), the spaces-in-between of vehicles, among others, to come up with a congestion-experience value as a kind of standard (on this, the "congestion-experience value" would be the basis for the here above-mentioned assumption for a calculation). The aim of this is to have a standard of congestion-values, if not all sensors may be active, to give you an appropriate calculation with the realistic values resp. sums in a real-time fashion. With this the best of the earlier named calculated alternative routes can be predicted, on a real-time fashion.
- Automation. Through the various used algorithms and comparison of values with relevant parameter's tolerance-values, as they come in at the central database 3, an automated decision may be taken for a new calculation or a recalculation. Especially, since a fluctuation within a parameter can occur, a tolerance to every occurring value can be set. Fluctuations can be humanly induced. On this experience basis a tolerance value to a given measurement (as a parameter) may be set. The ranges of tolerances to values are at first experience-based spans, if need be, but re-calculated on the basis of occurrence of values outside an absolute value. The tolerance-spans to parameter may be held in a matrix-list within the central database 3.
- Through using parameter's tolerance-values, a lower amount of "to be (re-)calculated values" may be needed.
- Synergies. Already calculated values, which were calculated on incoming parameter for the subsequent section may not have changed within its relevant tolerance-values. As such no new calculation is conducted and the earlier value remains unchanged and in storage for usage.

Preferably, the central database 3 comprises a self-learning algorithm based on a machine learning, as for example a 'decision tree machine learning algorithm' from both human- as well as machine-based inputs.

The algorithm may "ask" all kind of different questions and only to those, to which an answer is available, an input comes to the central database 3 and/or central computing center 4. The algorithm may ask questions to instances and, then, only the replies coming in from the questioned instances may be taken in the appropriate central database 3 instance. Accordingly, the differences in the answers from yet different instances to similar or equal questions to given circumstances, structures, and/or conditions may get a specific unique result from it.

As an example, the self-learning algorithm has a question to friction of asphalt-surfaces on roads in various regional sections. From the very different answers on one specific rainy day, although all have the same asphalt-specification laid on the respective sections, the algorithm can learn due to the different outcomes, that sections - lower friction - may have leaves on their surfaces (wooded surrounding), or - higher frictional values - are free of any debris.

Given a similar question during a dry and sunny day the algorithm itself may conclude that section(-s) which have lower frictional values remain possibly more humid or colder, which are in wooded areas of (sub-)urban areas.

As the algorithm repeats in "asking" the complete questions, it will learn in which perspectives it becomes an answer and may from this learn to ask directly the parameter, which can be provided.

As for instance the quantity of differences in just infrastructure, distances, hazardous situation on certain sections and likewise may be very different within the various different communities the algorithms resp. computer procedures needed should be logically build-up and be favorably self- intuitive for the centralized DB / "cloud".

These earlier mentioned possible combined inputs to a very same situation on a road, given construction works on road(-s), or anything likewise, are normally machine-based information to the central database 3 and/or central computing center 4. In cases of parallel reportings, a given difference must be overruled by preferably the human input, as the human may have a reporting from a local expert.

Examples of self-learning input(-s):
1. Due to sensors, the own antennas in the surroundings, real-time GPS, visual-data from e. g. a satellite network, locally placed congestion-cameras and/or radar data, a first self-learning effect is given on the basis of the connectivity to the sensors. Authorized personnel also have a possibility to put planned, or current construction and/or maintenance activities on for instance roads through the so-called authority access (AA)- server to the central database 3.
   The format for such entries may be in a machine-code, which is generated as an entitled public office employee preferably on a digital chart which marks the road and gives it a preference code, along with his identifier (ID). With a marked road and for instance the lower graded code, the potential road for an emergency-mission will become a low-rated choice by the machine, which give the potential best roads to emergency vehicles and warns the users on the relevant roads in various fashions, in case of an upcoming diversion or likewise. If respective data is not given in on a machine code basis, an instance in or after the AA-server towards the central database 3 and/or central computing center 4 can convert the information into a machine-code before it reaches the front-ends of the central database 3 and/or central computing center 4.
   All data is constantly updated and compared to other relevant values. Consequently, the system may improve the conditions of certain roads towards the calamity site in a real time basis.
2. Any update, be it from a call in which an estimate is given to a certain circumstance, may be taken into an account, as a (possible) entry in the central database 3 and/or central computing center 4 instance. For example, in case of a reporting, as for instance in a call, an emotional influence may be in the reporting. However, in also such a case, a comparison to an equal entry to a certain specific event could be taken if needed. Preferably, a library of the experienced and learned data is formed within the available storage. From this, an instant estimate may evolve on a kind of likelihood algorithm, if a likewise decision to a situation has to be taken.
3. The stress in a voice of a user making the emergency call as well as the loudness of the voice can be digitally analyzed. This may be a self-supervised learning within the algorithm. These indicators may give an impression on the stress of the caller, which may give a hint to the endured danger up till then, but also on a possible faulty judgement by a human on the situation.
   Preferably, the digital values on the respective voice characteristics of the call may be stored (temporarily) in the central database 3 and/or central computing center 4. Each speaker in the call may be identified by for instance the line-ID (fixed-line network) or SIM (cellular data network) and each voice characteristic may be saved digitally on the central database 3 and/or central computing center 4 for the duration of the call.
4. Every experience and/or evaluation on, for example, roads, used vehicle(-s), etc, are stored in an evaluation-logic within a central database 3 and/or central computing center 4 instance for the calculation of the most optimal road from the emergency offices, where the emergency vehicles are, to the calamity-site.
   The experience and/or evaluation values may be given in a standardized fashion, in which possibly preferably a hexadecimal format is given. With a hexadecimal format the advantage would be given to define the road type with preferably letter(-s) and with the numbers an experience and/or evaluation value of the updated status. The hexadecimal format could be given in, for instance: road type (Letter, 1 position) asphalt type (Letter + Number, 2 positions) county- resp. city-ID (Number, 2 positions) section (Number, 3 positions) experience resp. evaluation value (Letter + Number, 2 positions) and date (Number in yyyymmdd) → 'HR415736W220200727' would stand for e. g.: Highway [H], Rough 4-quality [R4], city-ID 15, section 736, under wet-condition only a rating 2 [W2], 27th of July 2020.

Preferably, the data network 1, is a national data network with its infrastructures in the same nation as where the sensors are and comprises a Home Public Land Mobile Network (HPLMN). HPLMN, as the central database 3 and central computing center 4, is only active in the home country of its customers. As soon as it gets into roaming, this part is taken over under VPLMN by the foreign network, with its "Cloud". It functions only locally/nationally (as a national network), as no connections exists to foreign authorities and foreign sensors from another foreign network.

Preferably, the central database 3 and/or central computing center 4 is configured to (re-) calculate and manage the various data and provide it to the relevant authorities. The management may include various, mostly traffic-relevant, entities of an urban and a rural surrounding. Each have their own specifics and/or uniqueness's, which need to be regarded under all circumstances. Road works, traffic congestions, as well as momentary traffic flows and their relevant speeds are some of the earlier quoted outsets for calculations and further monitoring tasks of the data network 1, with its central database 3.

Urban (rural) surroundings have their specifics and uniqueness's in each means, that e. g. a rural surrounding may have lesser money for keeping its road infrastructure in a rather good state, which in itself may have greater lengths (as well as widths). For example, many rural areas may have a truly bad infrastructure, which must not be the same as in urban surroundings. Furthermore, the vegetation may have an influence on humidity, which equals into more slippery roads.

Preferably, the data network 1 with its central database 3 has connectivity and the capability to manage the various traffic controlling entities, such as, for example, traffic controllers, traffic lights, traffic sensors, etc.

This management ability may only come active in case of an emergency, in which the authority and/or authorities give the HPLMN the permission over a protocol-level for an optimized traffic control to get emergency squads of the relevant service to the emergency site. Such an ability can also be given over a protocol-level by a single emergency vehicle to the HPLMN through the (cellular) data network 1.

As normal citizens have no required participation in, for example, fire-extinguishing, policing, salvation-activities, no by-standers and/or commenters will be needed/required by the emergency forces. Thus, the communications should preferably remain on a protocol-level. This is because, in order to avoid unwanted by-standers, no communication should be audible and for this, it should remain on a protocol-level, which is not usable for the public (dedicated protocol).

The cellular data network, as the HPLMN, has an automated overview of movement over the local infrastructures (: car-roads, factory-grounds, railways, etc.).
Through the inputs of the public-offices and/or authorities the contingency of the various infrastructural instances are precisely known to the data network 1.

Preferably, an autonomous vehicle, equipped with an eSIM, or a person with an active mobile entity in a car, provide the data network 1 with supplementary sensor data information such as, for example, an occurring congestion. This would also apply for the visited public land mobile network-customers.

The data network 1 knows the position of active/booked customers on to the network's nodes as well as the positions of other national mobile network's customers. Thus, they can be localized within the network's range.

The customers of other data network providers (for example from Visited Public Land Mobile Network (VPLMNs)) are provided with the relevant information for themselves, or their (autonomous- / driverless-) car through a logarithmic check on the provision. In this case the other data network's respective VPLMN's customer is handled as in a classic roaming situation and provided with the relevant information by the data network 1 with the locally best provision values, alongside with the relevant needed capacity.

Although a strongly declining part in the society, there may also be people who are not customers of any data network. Nevertheless, these people may drive vehicles as well. In such cases the general sensors, such as for instance congestion monitors at roads, may still capture them and thus will add them for being there as a part of an occurring congestion.

The relevant information to any HPLMN and/or VPLMN user could be in form of an installed app in their smartphone, which sets the display pulsing with for instance a blueish flash, thus indicating, that an emergency vehicle in progress is coming up to your position on the respective lane in the same direction. Such a signaling could also be accompanied by a shrilling type of inextinguishable noise and/or a vibrating mode which comes up in such a situation. Users who are not driving in the dedicated lane on where the emergency vehicle will pass do not get any alert/indication.

Preferably, to be able to get to the emergency site on the fastest possible way, if the need arises, a traffic monitoring must be updated frequently, at least during the response to the emergency call. To this various sensorics are available such as, for example, a magnetic-pulse sensitive cabling under the street or a heat-sensing infrared-sensor in the direction of oncoming vehicles, congestion warning systems based up on the flow and amount of traffic on roads. Preferably, even the various traffic-flows in even of the interconnected road-sections should be monitored, as for instance a congestion may not always occur on a monitored section, but will have an influence on the flow of the monitored section, possibly by even a delay.

The data network 1 has its infrastructure, over-the-air and/or land based cabling connected to the relevant sensorics. If a vehicle carries a SIM-card and a capable entity it may get all relevantly needed information, as an emergency vehicle is turning onto the same lane. If this is not the case various other visual indicators, which are in the driver's view (and be favorably installed on for instance street lamp posts), may signal an advancing emergency vehicle.

The local traffic, which travels in the same direction as the advancing emergency vehicle, can be shown evasive roads, or advancing opportunities for the various vehicles in the traffic flow. The central database 3, through an algorithm, may calculate and manage this signaling, to enable the advancing emergency vehicle a further uninterrupted flow towards the calamity site.

An emergency vehicle can, on the basis of the various actual traffic flows on the road to the calamity site and the calculated route by the central database 3, be advised to take a diverted route, which should bring it to it's goal faster.

For the category of self-driving and/or autonomous vehicles an adjustment may be needed, in which for instance through a, for example, installed Connected Car/4G LTE-connectivity appropriate data is transferred, which either lets the car set the direction indicator to the correct road-side, if need be slow down at a given time during getting to the far side of the road and coming to a full stop with the direction indicator switching in a warning lights modus.

The data is sent out to the autonomous car, as it proceeds on the same side of the street and as such due to the autonomous driving capacity of the car also in the same direction, at a certain distance in between. The distance in between is also dependent on the given coming side-streets and traffic flow ahead of the autonomous car.

If no such wireless-connectivity exists at that specific moment to the own (H-/V-)PLMN, due to possible blocking and/or non-provision of the radiation between an antenna and a vehicle, another network will take over. The data network 1 with the best provision, as well as the required network capacities, will provide -as in a roaming case- the other data network provider's customers.

As such, controlling and speeding up of an emergency response is achieved.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A system for controlling and speeding up the driving of an emergency vehicle to an emergency site location, the system comprising: a data network (1), an emergency control center (2), and a central computing center (4) connected to a central database (3), wherein:
the data network (1) is configured to provide connectivity between the central computing center (4) and the emergency control center (2);
the emergency control center (2) is configured to receive emergency information through a call or a warning, and transfer the received emergency information to the central computing center (4);
the emergency control center (2) is configured to acquire location data information of an emergency site location;
the data network (1) is configured to transmit the emergency information from the emergency control center (2) to the central computing center (4), the emergency information comprising one or more of the following parameters: emergency site location, needed amount of required emergency vehicles and/or personnel, sizes of the required emergency vehicles, and starting target-point;
the central computing center (4) is configured to signal instructions for adjustment, based on all available information, over the data network (1), to traffic entities on the way.

2. The system of claim 1, wherein the central computing center (4) is further configured to, taking into account all the available information, calculate the most optimal traffic route towards the emergency site location, and preferably
wherein the calculation of the most optimal traffic route towards the emergency site location at the central computing center (4) comprises measuring the congestion level by taking into account one or more of the following information: number of usable lanes of the road, respective traffic-flow of the road and its speed, possible additions in bends/roundabouts on the road, and number of big vehicles and its seizes.

3. The system of claim 1 or 2, wherein the signaling of instructions for adjustment, over the data network (1), to traffic entities on the optimal route, further comprises instructing any blocking vehicles to get out of the way, and/or
wherein the location data information comprises: GPS information and/or information from sensors in the emergency site location.

4. The system of any one of claims 1 to 3, further comprising a satellite (5) having connectivity with the central database (3), wherein:
the data network (1) is further configured to acquire information from the satellite (5), said satellite information comprising: location and/or tracking information of the vehicles on a road;
the central computing center (4) is configured to combine the information from the emergency control center (2) with the information from the satellite (5), wherein the information from the satellite (5) comprises real-time GPS information and/or data from locally based traffic sensors; and preferably
wherein the data from the locally based traffic sensors comprises real time information regarding: local road infrastructure, undergoing road constructions having been commenced, and/or traffic congestions on the road towards the incident.

5. The system of any one of claims 1 to 4, wherein the data network (1) is a cellular data network (1),
wherein the cellular data network (1) comprises a 4G, 5G and/or WiFi network, and/or
wherein the cellular data network (1) comprises a fixed network, and/or
wherein the central database (3) is configured to store all the information from the data network (1), emergency site location entities, and satellite (5),
the central computing center (4) is configured to manage the information stored at the central database (3),
in an emergency case, the central computing center (4) is configured to distribute this information to the emergency control center (2) and/or to designated emergency personnel and vehicles on the call for the emergency, and/or
wherein the data network (1) is configured to acquire data from the emergency site location through the use of sensors in the emergency site location, and/or
wherein the central database comprises one or a combination of the following information: maps and plans of infrastructural issues on a real-time bases; signaling information from the traffic sensors and sensors from the emergency site location as well as the sensor's location.

6. The system of any one of claims 1 to 5, further comprising an Authority Access, AA, server configured to perform access control to the data network (1), the central computing center (4) and/or the central data base,
wherein the AA server has connectivity to front-end instances of the central computing center (4) and/or central data base through either a gateway, GW, and/or a Mobile Switching Center, MSC, node of the data network (1), and preferably
wherein the AA server comprises a secure gateway for an authority or authorities with a limited accessibility through a dedicated access control list, ACL, and/or
wherein the AA server is configured to enable a respective public office or authority to feed the central database (3) with road information.

7. The system of any one of claims 1 to 6, further comprising a Home Location Register, HLR, and/or a Home Subscriber Server, HSS, wherein the HLR and/or HSS are configured to store a white list of international mobile subscriber identities, IMSIs, related to emergency vehicles for indicating possible deployment vehicles.

8. A method for controlling and speeding up the driving of an emergency vehicle to an emergency site location in a system, wherein the system comprises: a data network, an emergency control center, and a central computing center connected to a central database, the method comprising the steps of:
providing, by the data network, connectivity between the central computing center and the emergency control center;
receiving, at the emergency control center, emergency information through a call or a warning, and transferring the received emergency information to the central computing center;
acquiring, by the emergency control center, location data information of an emergency site location;
transmitting, by the data network, the emergency information from the emergency control center to the central computing center, the emergency information comprising one or more of the following parameters: emergency site location, needed amount of required emergency vehicles and/or personnel, sizes of the required emergency vehicles, and starting target-point;
signaling, from the central computing center, instructions for adjustment, based on all available information, over the data network, to traffic entities on the way.

9. The method of claim 8, further comprising:
calculating, by the central computing center, taking into account all the available information, the most optimal traffic route towards the emergency site location, and preferably
wherein calculating the most optimal traffic route towards the emergency site location at the central computing center comprises measuring the congestion level by taking into account one or more of the following information: number of usable lanes of the road, respective traffic-flow of the road and its speed, possible additions in bends/roundabouts on the road, and number of big vehicles and its seizes.

10. The method of claim 8 or 9, wherein the signaling of instructions for adjustment, over the data network, to traffic entities on the optimal route, further comprises instructing any blocking vehicles to get out of the way, and/or
wherein the location data information comprises: GPS information and/or information from sensors in the emergency site location.

11. The method of any one of claims 8 to 10, the system further comprising a satellite having connectivity with the central database, the method further comprising:
acquiring, by the data network, information from the satellite, said satellite information comprising: location and/or tracking information of the vehicles on a road;
combining, by the central computing center, the information from the emergency control center with the information from the satellite, wherein the information from the satellite comprises real-time GPS information and/or data from locally based traffic sensors, and preferably
wherein the data from the locally based traffic sensors comprises real time information regarding: local road infrastructure, undergoing road constructions having been commenced, and/or traffic congestions on the road towards the incident.

12. The method of any one of claims 8 to 11, wherein the data network is a cellular data network,
wherein the cellular data network comprises a 4G, 5G and/or WiFi network, and/or
wherein the cellular data network comprises a fixed network.

13. The method of any one of claims 8 to 12, further comprising:
storing, by the central database, all the information from the data network, emergency site location entities, and satellite;
managing, by the central computing center, the information stored at the central database;
distributing, by the central computing center, in an emergency case, the information stored by the central database to the emergency control center and/or to designated emergency personnel and vehicles on the call for the emergency; and/or
acquiring, by the data network, data from the emergency site location through the use of sensors in the emergency site location; and/or
wherein the central database comprises one or a combination of the following information: maps and plans of infrastructural issues on a real-time bases; signaling information from the traffic sensors and sensors from the emergency site location as well as the sensor's location.

14. The method of any one of claims 8 to 13, further comprising an Authority Access, AA, server, and the method further comprises:
performing, by the AA server, access control to the data network, the central computing center and/or the central data base, and/or
wherein the AA server has connectivity to front-end instances of the central computing center and/or central data base through either a gateway, GW, and/or a Mobile Switching Center, MSC, node of the data network, and preferably
wherein the AA server comprises a secure gateway for an authority or authorities with a limited accessibility through a dedicated access control list, ACL, and/or the method further comprises:
enabling, by the AA server, a respective public office or authority to feed the central database (3) with road information.

15. The method of any one of claims 8 to 14 further comprising a Home Location Register, HLR, and/or a Home Subscriber Server, HSS, the method further comprising the step of:
storing, by the HLR and/or HSS, a white list of international mobile subscriber identities, IMSIs, related to emergency vehicles for indicating possible deployment vehicles.

## Amended claims

### Amended claims in accordance with Rule 137(2) EPC.

1. A system for controlling and speeding up the driving of an emergency vehicle to an emergency site location, the system comprising: a data network (1), an emergency control center (2), and a central computing center (4) connected to a central database (3), wherein:
the data network (1) is configured to provide connectivity between the central computing center (4) and the emergency control center (2);
the emergency control center (2) is configured to receive emergency information through a call or a warning, and transfer the received emergency information to the central computing center (4);
the emergency control center (2) is configured to acquire location data information of an emergency site location;
the data network (1) is configured to transmit the emergency information from the emergency control center (2) to the central computing center (4), the emergency information comprising one or more of the following parameters: emergency site location, needed amount of required emergency vehicles and/or personnel, sizes of the required emergency vehicles, and starting target-point;
the central computing center (4) is configured to signal instructions for adjustment, based on all available information, over the data network (1), to traffic entities on the way,
**characterized in that** the system further comprises an Authority Access, AA, server configured to perform access control to the data network (1), the central computing center (4) and/or the central data base, wherein the AA server has connectivity to front-end instances of the central computing center (4) and/or central data base through either a gateway, GW, and/or a Mobile Switching Center, MSC, node of the data network (1),
wherein the AA server comprises a secure gateway for an authority or authorities with a limited accessibility through a dedicated access control list, ACL, and the AA server is configured to enable a respective public office or authority to feed the central database (3) with road information.

2. The system of claim 1, wherein the central computing center (4) is further configured to, taking into account all the available information, calculate the most optimal traffic route towards the emergency site location, and preferably
wherein the calculation of the most optimal traffic route towards the emergency site location at the central computing center (4) comprises measuring the congestion level by taking into account one or more of the following information: number of usable lanes of the road, respective traffic-flow of the road and its speed, possible additions in bends/roundabouts on the road, and number of big vehicles and its seizes.

3. The system of claim 1 or 2, wherein the signaling of instructions for adjustment, over the data network (1), to traffic entities on the optimal route, further comprises instructing any blocking vehicles to get out of the way, and/or
wherein the location data information comprises: GPS information and/or information from sensors in the emergency site location.

4. The system of any one of claims 1 to 3, further comprising a satellite (5) having connectivity with the central database (3), wherein:
the data network (1) is further configured to acquire information from the satellite (5), said satellite information comprising: location and/or tracking information of the vehicles on a road;
the central computing center (4) is configured to combine the information from the emergency control center (2) with the information from the satellite (5), wherein the information from the satellite (5) comprises real-time GPS information and/or data from locally based traffic sensors; and preferably
wherein the data from the locally based traffic sensors comprises real time information regarding: local road infrastructure, undergoing road constructions having been commenced, and/or traffic congestions on the road towards the incident.

5. The system of any one of claims 1 to 4, wherein the data network (1) is a cellular data network (1),
wherein the cellular data network (1) comprises a 4G, 5G and/or WiFi network, and/or wherein the cellular data network (1) comprises a fixed network, and/or
wherein the central database (3) is configured to store all the information from the data network (1), emergency site location entities, and satellite (5),
the central computing center (4) is configured to manage the information stored at the central database (3),
in an emergency case, the central computing center (4) is configured to distribute this information to the emergency control center (2) and/or to designated emergency personnel and vehicles on the call for the emergency, and/or
wherein the data network (1) is configured to acquire data from the emergency site location through the use of sensors in the emergency site location, and/or
wherein the central database comprises one or a combination of the following information: maps and plans of infrastructural issues on a real-time bases; signaling information from the traffic sensors and sensors from the emergency site location as well as the sensor's location.

6. The system of any one of claims 1 to 5, further comprising a Home Location Register, HLR, and/or a Home Subscriber Server, HSS, wherein the HLR and/or HSS are configured to store a white list of international mobile subscriber identities, IMSIs, related to emergency vehicles for indicating possible deployment vehicles.

7. A method for controlling and speeding up the driving of an emergency vehicle to an emergency site location in a system, wherein the system comprises: a data network, an emergency control center, and a central computing center connected to a central database, the method comprising the steps of:
providing, by the data network, connectivity between the central computing center and the emergency control center;
receiving, at the emergency control center, emergency information through a call or a warning, and transferring the received emergency information to the central computing center;
acquiring, by the emergency control center, location data information of an emergency site location;
transmitting, by the data network, the emergency information from the emergency control center to the central computing center, the emergency information comprising one or more of the following parameters: emergency site location, needed amount of required emergency vehicles and/or personnel, sizes of the required emergency vehicles, and starting target-point;
signaling, from the central computing center, instructions for adjustment, based on all available information, over the data network, to traffic entities on the way,
**characterized in that** the system further comprises an Authority Access, AA, server comprising a secure gateway for an authority or authorities with a limited accessibility through a dedicated access control list, ACL, and the method further comprises:
performing, by the AA server, access control to the data network, the central computing center and/or the central data base, wherein the AA server has connectivity to front-end instances of the central computing center and/or central data base through either a gateway, GW, and/or a Mobile Switching Center, MSC, node of the data network, and
enabling, by the AA server, a respective public office or authority to feed the central database with road information.

8. The method of claim 7, further comprising:
calculating, by the central computing center, taking into account all the available information, the most optimal traffic route towards the emergency site location, and preferably
wherein calculating the most optimal traffic route towards the emergency site location at the central computing center comprises measuring the congestion level by taking into account one or more of the following information: number of usable lanes of the road, respective traffic-flow of the road and its speed, possible additions in bends/roundabouts on the road, and number of big vehicles and its seizes.

9. The method of claim 7 or 8, wherein the signaling of instructions for adjustment, over the data network, to traffic entities on the optimal route, further comprises instructing any blocking vehicles to get out of the way, and/or
wherein the location data information comprises: GPS information and/or information from sensors in the emergency site location.

10. The method of any one of claims 7 to 9, the system further comprising a satellite having connectivity with the central database, the method further comprising:
acquiring, by the data network, information from the satellite, said satellite information comprising: location and/or tracking information of the vehicles on a road;
combining, by the central computing center, the information from the emergency control center with the information from the satellite, wherein the information from the satellite comprises real-time GPS information and/or data from locally based traffic sensors, and preferably
wherein the data from the locally based traffic sensors comprises real time information regarding: local road infrastructure, undergoing road constructions having been commenced, and/or traffic congestions on the road towards the incident.

11. The method of any one of claims 7 to 10, wherein the data network is a cellular data network,
wherein the cellular data network comprises a 4G, 5G and/or WiFi network, and/or wherein the cellular data network comprises a fixed network.

12. The method of any one of claims 7 to 11, further comprising:
storing, by the central database, all the information from the data network, emergency site location entities, and satellite;
managing, by the central computing center, the information stored at the central database;
distributing, by the central computing center, in an emergency case, the information stored by the central database to the emergency control center and/or to designated emergency personnel and vehicles on the call for the emergency; and/or
acquiring, by the data network, data from the emergency site location through the use of sensors in the emergency site location; and/or
wherein the central database comprises one or a combination of the following information: maps and plans of infrastructural issues on a real-time bases; signaling information from the traffic sensors and sensors from the emergency site location as well as the sensor's location.

13. The method of any one of claims 7 to 12 further comprising a Home Location Register, HLR, and/or a Home Subscriber Server, HSS, the method further comprising the step of:
storing, by the HLR and/or HSS, a white list of international mobile subscriber identities, IMSIs, related to emergency vehicles for indicating possible deployment vehicles.
